**Europäisches Patentamt**

**European Patent Office**

**Office européen des brevets**

(19)

(11) Veröffentlichungsnummer : **0 405 119 B1**

# (12) EUROPÄISCHE PATENTSCHRIFT

(45) Veröffentlichungstag der Patentschrift :
**21.07.93 Patentblatt 93/29**

(51) Int. Cl.$^5$ : **B01D 53/34**

(21) Anmeldenummer : **90109315.3**

(22) Anmeldetag : **17.05.90**

(54) **Verfahren und Vorrichtung zur Abscheidung von metallischen Quecksilber aus durch Vergasung oder Verbrennung von Kohle gewonnenem Gas.**

(30) Priorität : **24.06.89 DE 3920702**

(43) Veröffentlichungstag der Anmeldung :
**02.01.91 Patentblatt 91/01**

(45) Bekanntmachung des Hinweises auf die
Patenterteilung :
**21.07.93 Patentblatt 93/29**

(84) Benannte Vertragsstaaten :
**DE DK NL SE**

(56) Entgegenhaltungen :
**DE-A- 2 948 305**
**US-A- 3 693 323**
**US-A- 4 419 107**

(73) Patentinhaber : **Krupp Koppers GmbH**
**Altendorfer Strasse 120**
**W-4300 Essen 1 (DE)**

(72) Erfinder : **Firnhaber, Bernhard, Dr.**
**Pelmanstrasse 40**
**W-4300 Essen 1 (DE)**
Erfinder : **Brake, Herman-Josef**
**Kevelohbusch 1a**
**W-4300 Essen 14 (DE)**

## Beschreibung

Die Erfindung betrifft ein Verfahren und eine Vorrichtung zur Abscheidung von metallischem Quecksilber aus durch Vergasung oder Verbrennung von Kohle gewonnenem Gas, bei dem das Gas über ein Geflecht geleitet wird, das Gold als amalgambildendes Metall enthält.

Bis zu 90 % des in der Einsatzkohle vorhandenen Quecksilbers gelangt bei der Vergasung oder Verbrennung von Kohle in das erzeugte Partialoxidations- bzw. Rauchgas. Der Grund hierfür ist der relativ edle Charakter des Quecksilbers, das in der Spannungsreihe bekanntlich über dem Wasserstoff steht, sowie der hohe Dampfdruck von metallischem Quecksilber. Wegen dieser Eigenschaften ist es auch nicht möglich, das Quecksilber aus dem Kohlegas durch die üblichen Gaswäschen abzuscheiden. Die Folge hiervon ist, daß heute durch den Kohleverbrauch beträchtliche Quecksilbermengen in die Atmosphäre gelangen. Eine Abschätzung besagt, daß diese Menge allein bei den Kohlekraftwerken in der Bundesrepublik Deutschland bei 22 Tonnen Quecksilber pro Jahr liegt, während für die gesamte Welt für das Jahr 1978 mit einem Wert von 238 Tonnen Quecksilber gerechnet wurde, der bis zum Jahre 2000 auf 843 Tonnen steigen soll. Obwohl die Giftigkeit von Quecksilber für Mensch und Tier allgemein bekannt ist, wurde diese Tatsache bisher als unvermeidlich akzeptiert, da ein technisch verwendbares Verfahren zur Abscheidung von Quecksilber aus den genannten Gasen bisher nicht zur Verfügung stand. Das wachsende Umweltbewußtsein der Bevölkerung kann jedoch in absehbarer Zeit sehr wohl dazu führen, daß auf die Betreiber von Kohlevergasungs- bzw. -verbrennungsanlagen ein stärkerer Druck ausgeübt wird, die bestehende Situation zu ändern.

Aus der DE-A-29 48 305 ist bereits ein Verfahren bekannt, bei dem die Abscheidung von metallischem Quecksilber aus den Abgasen thermischer Prozesse durch Amalgambildung erfolgen soll. Hierbei kann unter anderem auch Gold als amalgambildendes Metall verwendet werden, wobei die amalgambildenden Substanzen in Form von Geflechten oder Filtern zum Einsatz gelangen können. Das zu behandelnde Gas soll dabei bei einer Temperatur zwischen 50 und 300°C über bzw. durch das Filter geleitet werden, das nach Erschöpfung der Quecksilberaufnahmekapazität aus dem Gas entfernt und durch ein neues unverbrauchtes Filter ersetzt werden soll.

Bei der Verwendung von Gold als amalgambildendem Metall ist jedoch darauf zu achten, daß dies wegen des hohen Goldpreises nicht zu einer zu hohen Kostenbelastung führt. Der Erfindung liegt daher die Aufgabe zugrunde, ein möglichst kostengünstiges und betriebssicheres Verfahren zur Abscheidung von metallischem Quecksilber aus durch Vergasung oder Verbrennung von Kohle gewonnenem Gas zu schaffen.

Das der Lösung dieser Aufgabe dienende Verfahren der eingangs genannten Art ist erfindungsgemäß dadurch gekennzeichnet, daß das entstaubte und gekühlte Gas bei einer Temperatur zwischen 10 und 50°C über eine Packung aus feindrahtigem Gold/Platin-Netz geleitet und daran anschließend das durch das Gold/Platin-Netz als Amalgam gebundene Quecksilber in Gegenwart eines inerten Spülgases durch Ausdampfen bei Temperaturen von 500 bis 800°C in Freiheit gesetzt und durch Kühlung aus dem beladenen Spülgasstrom abgeschieden wird, wobei der Platingehalt der verwendeten Gold/Platin-Netze zwischen 10 und 30 Gew.-% sowie deren Maschenzahl je cm² zwischen 50 und 1200 liegt und für die Herstellung der Netze Drähte mit einer Stärke zwischen 0,06 und 0,35 mm verwendet werden.

Das erfindungsgemäße Verfahren beruht dabei auf der Erkenntnis, daß Quecksilber mit Goldoberflächen unter Bildung von Amalgam bereits bei Raumtemperatur schnell und vollständig reagiert, und daß diese Reaktion bei Temperaturen oberhalb von 500°C umkehrbar ist. Dabei wird das als Amalgam gebundene Quecksilber verdampft und die Goldoberfläche wieder in ihren ursprünglichen Zustand überführt, so daß sie für weitere Quecksilberabsorptionen und -desorptionen zur Verfügung steht. Die Schwierigkeit besteht allerdings darin, eine für die Umsetzung notwendige hohe spezifische Goldoberfläche zu schaffen, ohne daß dies wegen des hohen Goldpreises zu einer zu hohen Kostenbelastung führt. Außerdem muß berücksichtigt werden, daß metallisches Gold nur eine verhältnismäßig geringe mechanische Stabilität aufweist.

Erfindungsgemäß ist dieses Problem deshalb durch die Anwendung von feindrahtigen Gold/Platin-Netzen gelöst worden, die einerseits aufgrund ihrer Netzstruktur eine ausreichend große spezifische Oberfläche aufweisen und andererseits aufgrund ihres Platingehaltes eine ausreichende mechanische Stabilität besitzen.

Obwohl das erfindungsgemäße Verfahren generell auch zur Behandlung von Rauchgas aus der Kohleverbrennung geeignet ist, stellt die Behandlung von durch Kohledruckvergasung erzeugtem Partialoxidationsgas ein bevorzugtes Anwendungsgebiet der Erfindung dar. Hierfür sind folgende Gründe maßgeblich:

- Dieses Gas ist nach der ohnehin notwendigen intensiven Wasserwäsche zur Entstaubung extrem sauber. Der Staubgehalt ist < 0,1 mg/Nm³, starke Säuren, wie HCl und HF, sind auf Werte unterhalb der Nachweisgrenze ausgewaschen.
- Die Gasmenge beträgt nur einen Bruchteil der Rauchgasmenge, die bei der Verbrennung von Kohle pro MW elektrischer Energie anfällt. Zusätzlich ist das Betriebsvolumen aufgrund des Vergasungsdruckes, z.B. ca. 25 bar, und der Temperatur weiter stark verkleinert.

- Die niedrige Gastemperatur nach der Wasser- bzw. Schwefelwäsche ist für die Quecksilber-Entfernung ein wesentlicher Faktor.

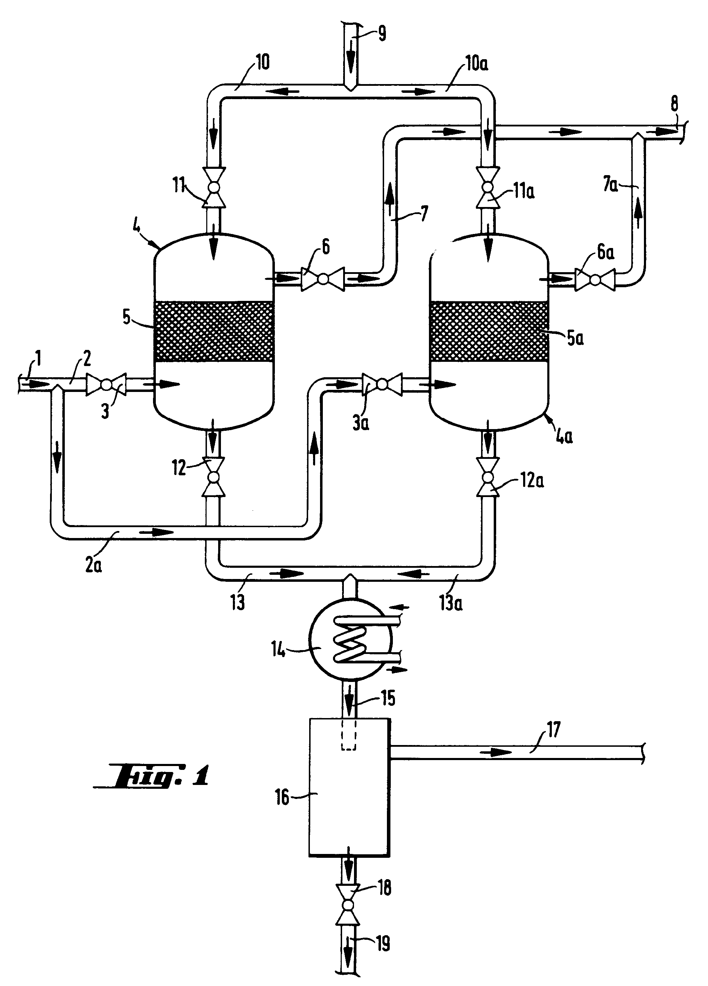

Eine mögliche Anlage zur Durchführung des erfindungsgemäßen Verfahrens ist in der Abbildung 1 als Fließschema dargestellt. Diese Anlage weist zwei Druckbehälter 4 und 4a auf, die beide mit einer Packung aus Gold/Platin-Netzen 5 bzw. 5a bestückt sind. Beim Betrieb der Anlage wird jeweils einer der beiden Druckbehälter 4 oder 4a zur Absorption von Quecksilber genutzt, während gleichzeitig im anderen Druckbehälter das an der Oberfläche der Gold/Platin-Netze gebundene Quecksilber desorbiert wird, so daß insgesamt gesehen ein kontinuierlicher Betrieb der Anlage möglich ist. Im einzelnen läuft der Betrieb der Anlage hierbei wie folgt ab:

Entstaubtes und vorzugsweise bis auf eine Temperatur von 10 bis 50°C gekühltes Kohlegas wird der Anlage über die Leitung 1 zugeführt und gelangt bei geöffnetem Ventil 3 über die Leitung 2 in den Druckbehälter 4. Das Ventil 3a in der Leitung 2a bleibt hierbei geschlossen. Das in den Druckbehälter 4 eingetretene Gas durchströmt von unten nach oben die Gold/Platin-Netze der Packung 5, wobei es von seinem Quecksilbergehalt befreit wird. Anschließend tritt das Gas durch das geöffnete Ventil 6 und die Leitung 7 wieder aus dem Druckbehälter 4 aus und kann danach über die Leitung 8 seiner weiteren Verwendung zugeführt werden.

Wähend die Packung 5 im Druckbehälter 4 mit Quecksilber beladen wird, erfolgt gleichzeitig die Regenerierung der beladenen Packung 5a im Druckbehälter 4a. Der nach der Beladung unter dem jeweiligen Gasdruck stehende Druckbehälter 4a wird hierbei zunächst durch öffnen des Ventils 12a entspannt, wobei die Ventile 3a, 6a und 11a geschlossen sind. Das aus dem Druckbehälter 4a austretende Entspannungsgas gelangt über die Leitung 13a, den Kühler 14, die Leitung 15 und den Abscheider 16 in die Leitung 17. Das über diese Leitung aus dem Verfahren austretende Entspannungsgas wird zweckmäßigerweise durch Abfackeln vernichtet. Nach erfolgter Entspannung wird die Packung 5a durch äußere Beheizung oder durch induktive Beheizung bis auf eine Temperatur von vorzugsweise 600 bis 650°C aufgeheizt. Gleichzeitig wird das Ventil 11a geöffnet und über die Leitungen 9 und 10a ein Spülgas, vorzugsweise Stickstoff, in den Behälter 4a geleitet. Anstelle von Stickstoff kann aber auch ein anderes Spülgas, wie beispielsweise Rauchgas oder Kohlegas, verwendet werden. Das Spülgas trägt die durch Erhitzung freigesetzten Quecksilberdämpfe über das geöffnete Ventil 12a und die Leitung 13a in den mit Kühlwasser beaufschlagten Kühler 14, in dem flüssiges Quecksilber kondensiert und anschließend durch die Leitung 15 in den Abscheider 16 fließt. Das Spülgas wird wie zuvor bereits das Entspannungsgas durch die Leitung 17 abgezogen und kann ebenfalls durch Abfackeln vernichtet werden. Das flüssige Quecksilber, das im Abscheider 16 gesammelt wird, kann periodisch durch öffnen des Ventils 18 über die Leitung 19 abgezogen werden.

Nachdem die Packung 5a vollständig regeneriert worden ist, werden die Ventile so umgeschaltet, daß dieselbe jetzt über die Leitung 2a mit dem Kohlegas beaufschlagt wird, während gleichzeitig die Packung 5 in der vorstehend beschriebenen Art und Weise regeneriert wird. Das vom Quecksilber befreite Kohlegas wird dabei über die Leitung 7a abgezogen und anschließend ebenfalls über die Leitung 8 seiner Weiterverwendung zugeführt.

Die Wirksamkeit des erfindungsgemäßen Verfahrens wird durch die nachfolgenden Beispiele belegt:

Beispiel 1:

Im Laborversuch konnte die sehr effektive Aufnahmefähigkeit eines Au/Pt-Netzes für Hg-Dampf gezeigt werden:

Bei Raumtemperatur und Atmosphärendruck wurde ein Stickstoffstrom mit 4 mg Hg/m³ beladen und mit einer Strömungsgeschwindigkeit von 0,08 m³/h durch eine Packung aus 0,35 g Au/Pt-Netz geleitet.

Der Platingehalt der Legierung war 10 Gew.-%. Der Drahtdurchmesser betrug 0,06 mm bei 1024 Maschen/cm². Zur Herstellung der Packung war das Netz mit einer Länge von 15 mm auf einen Durchmesser von 4 mm aufgerollt und in ein Rohr gleichen Durchmessers gesteckt.

Die Beladung des Netzes mit Quecksilber wurde gravimetrisch verfolgt. Die Analyse des Reingases wurde nur gelegentlich durchgeführt. Die Absorption war zunächst vollständig, im gereinigten Gas konnte kein Hg nachgewiesen werden. Erst bei einer Beladung von 63 Gew.-%, bezogen auf das Gewicht des Netzes, waren nachweisbar Hg-Spuren im Reingas enthalten. Der Versuch wurde 51 Tage bis zu einer Beladung von 94 Gew.-% bei zunehmendem Durchbruch an Hg-Dampf fortgesetzt.

Zur Abreinigung wurde die beladene Packung auf 600°C aufgeheizt und die Quecksilberdämpfe mit einem leichten Stickstoffstrom in eine Kühlfalle geleitet, wo sie auskondensierten. In 15 min. wurden 95 % des im Netz aufgenommenen Quecksilbers ausgedampft.

Das regenerierte Netz wurde dann erneut zur Hg-Adsorption unter o.g. Bedingungen eingesetzt mit gleich guter Wirkung wie das neue Netz.

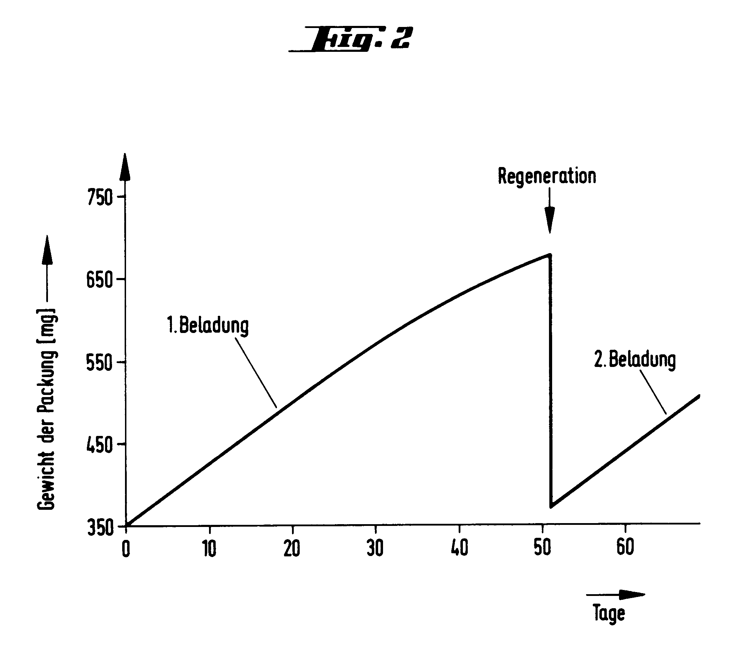

Die Gewichtsänderungen (mg) des Au/Pt-Netzes, in Abhängigkeit von der Versuchsdauer (Tage), während der 1. Beladung, der Regenerierung und der Anfangsphase der 2. Beladung sind in Abbildung 2 graphisch dargestellt.

<u>Beispiel 2:</u>

Ein zweiter Versuch wurde mit Produktgas aus einer Pilotanlage zur Kohledruckvergasung durchgeführt. Dazu wurde im by-pass 1 Nm$^3$/h Kohlegas über eine Au/Pt-Netz-Packung geleitet und die Hg-Entfernung analytisch verfolgt.

Bedingungen und Ergebnis dieses Versuches waren:

Kohlegas:          1 Nm$^3$/h bei 25 bar und 35°C

| Zusammensetzung: | | |
|---|---|---|
| CO | 67,9 | Vol.% |
| $H_2$ | 26,5 | " |
| $CO_2$ | 0,3 | " |
| $N_2$ | 4,8 | " |
| $H_2S$ | 0,2 | " |
| $H_2O$ | 0,2 | " |
| Hg | 0,17 | mg/Nm$^3$ |

Adsorberpackung:   10 g Au/Pt-Netz derselben Beschaffenheit wie im 1. Versuch wurde zu einem Stopfen mit äußerem Durchmesser von 12,5 mm und 60 mm Länge gewickelt und in ein Rohr gleichen inneren Durchmessers plaziert.

Ergebnis:          Das durch die Au/Pt-Packung geströmte Gas wurde nach 24, 144, 336 Betriebsstunden auf Quecksilber analysiert. Die Hg-Konzentration war in allen Fällen unterhalb der Nachweisgrenze von 0,002 mg Hg/Nm$^3$ Gas. Die Packung wurde dann herausgenommen. Sie zeigt eine auf Amalgambildung hinweisende Verfärbung an der Anströmseite, die nur einige mm tief in Strömungsrichtung verlief. Der größte Teil der Packung war unverändert.

**Patentansprüche**

1.   Verfahren zur Abscheidung von metallischem Quecksilber aus durch Vergasung oder Verbrennung von Kohle gewonnenem Gas, bei dem das Gas über ein Geflecht geleitet wird, das Gold als amalgambildendes Metall enthält, dadurch gekennzeichnet, daß das entstaubte und gekühlte Gas bei einer Temperatur zwischen 10 und 50°C über eine Packung aus feindrahtigem Gold/Platin-Netz geleitet und daran anschließend das durch das Gold/Platin-Netz als Amalgam gebundene Quecksilber in Gegenwart eines Spülgases durch Ausdampfen bei Temperaturen von 500 bis 800°C in Freiheit gesetzt und durch Kühlung aus dem beladenen Spülgasstrom abgeschieden wird, wobei der Platingehalt der verwendeten Gold/Platin-Netze zwischen 10 und 30 Gew.-% sowie deren Maschenzahl je cm$^2$ zwischen 50 und 1200 liegt und für die Herstellung der Netze Drähte mit einer Stärke zwischen 0,06 und 0,35 mm verwendet werden.

2.   Verfahren nach Anspruch 1, dadurch gekennzeichnet, daß die Regenerierung der beladenen Gold/Platin-Netze vorzugsweise bei einer Temperatur von 550 bis 650°C erfolgt.

3.   Verfahren nach den Ansprüchen 1 und 2, dadurch gekennzeichnet, daß als Spülgas vorzugsweise Stickstoff verwendet wird.

4.   Verfahren nach den Ansprüchen 1 bis 3, dadurch gekennzeichnet, daß das anfallende Spül- und Entspannungsgas nach Abscheidung des Quecksilbers durch Abfackeln vernichtet wird.

5.   Vorrichtung zur Durchführung des Verfahrens nach den Ansprüchen 1 bis 4, dadurch gekennzeichnet, daß dieselbe zwei Druckbehälter (4 und 4a) aufweist, die beide mit einer Packung (5 und 5a) aus feindrahtigem Gold/Platin-Netz versehen sind, wobei die verwendeten Golg/Platin-Netze den im Anspruch 1 genannten Bedingungen entsprechen.

**Claims**

1. Process for removing metallic mercury from gas obtained by gasification or combustion of coal, in which the gas is passed over a braided material which contains gold as an amalgam-forming metal, characterized in that the dedusted and cooled gas is passed at a temperature between 10 and 50°C over a packing made of fine-strand gold/platinum gauze after which the mercury bound as an amalgam by the gold/platinum gauze is liberated by vapourisation in the presence of a scavenging gas at temperatures of 500 to 800°C and is removed from the laden scavenging gas stream by cooling, the platinum content of the gold/platinum gauzes used being between 10 and 30 % by weight and the number of meshes per $cm^2$ being between 50 and 1200, wires with thicknesses between 0.06 and 0.35 mm being used for fabricating the gauzes.

2. Process according to Claim 1, characterized in that the regeneration of the laden gold/platinum gauzes is carried out preferably at a temperature of 550 to 650°C.

3. Process according to Claims 1 and 2, characterized in that nitrogen is used preferably as the scavenging gas.

4. Process according to Claims 1 to 3, characterized in that the scavenging gas and expansion gas obtained after removal of the mercury are destroyed by flaring off.

5. Device for carrying out the process according to Claims 1 to 4, characterized in that the same has two pressure vessels (4 and 4a) which are both provided with packings (5 and 5a) made of fine-strand gold/platinum gauze, and the gold/platinum gauzes used correspond to the conditions stated in Claim 1.

**Revendications**

1. Méthode de séparation du mercure métallique de gaz obtenu par la gazéification ou la combustion de charbon, dans laquelle le gaz est acheminé sur une grille qui contient de l'or comme métal amalgamant, caractérisée en ce que le gaz dépoussiéré et refroidi est acheminé à une température comprise entre 10 et 50°C sur une garniture en réseau or/platine sous forme de fils de faible diamètre et en ce que le mercure lié en tant qu'amalgame par le réseau or/platine est ensuite libéré par évaporation en présence d'un gaz de balayage à des températures de 500 à 800°C et est séparé par refroidissement du flux de gaz de balayage chargé, la teneur en platine et le numéro de maille du réseau or/platine utilisé étant compris, respectivement, entre 10 et 30% en poids et entre 50 et 1200 par $cm^2$, et des fils d'une épaisseur comprise entre 0,06 et 0,35 mm étant utilisés pour la fabrication des réseaux.

2. Méthode selon la revendication 1, caractérisée en ce que la régénération du réseau or/platine chargé se fait de préférence à une température comprise entre 550 et 650°C.

3. Méthode selon les revendications 1 et 2, caractérisée en ce qu'on utilise de préférence de l'azote en tant que gas de balayage.

4. Méthode selon les revendications 1 à 3, caractérisée en ce que le gas de balayage et de détente est détruit par combustion à la torche après séparation du mercure.

5. Dispositif pour la mise en oeuvre de la méthode selon les revendications 1 à 4, caractérisée en ce que celui-ci présente deux réservoirs sous pression (4 et 4a), qui sont chacun pourvus d'une garniture (5 et 5a) en réseau or/platine sous forme de fils de faible diamètre, les réseaux or/platine utilisés correspondant aux conditions citées dans la revendication 1.

**Fig. 1**

## _Fig. 2_